(19) Europäisches Patentamt
European Patent Office
Office européen des brevets

(11) **EP 3 716 058 A1**

(12) **EUROPÄISCHE PATENTANMELDUNG**

(43) Veröffentlichungstag:
**30.09.2020 Patentblatt 2020/40**

(21) Anmeldenummer: **19165906.9**

(22) Anmeldetag: **28.03.2019**

(51) Int Cl.:
**G06F 9/4401** (2018.01)  **G06F 9/54** (2006.01)
**G06F 8/20** (2018.01)  **G06F 8/36** (2018.01)
**G06N 20/00** (2019.01)  **H04L 29/08** (2006.01)

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder: **Schall, Daniel**
**1220 Wien (AT)**

(74) Vertreter: **Maier, Daniel Oliver**
**Siemens AG**
**Postfach 22 16 34**
**80506 München (DE)**

(54) **VERFAHREN ZUM ANSTEUERN EINES GERÄTS MIT EINEM NEUEN PROGRAMMCODE**

(57)  Verfahren (300) zum Ansteuern eines Geräts mit einem neuen Programmcode und folgende Schritte ausgeführt werden:

a) Ermitteln (310) und Laden eines neuen Steuercodes aus einer Programmbibliothek,

b) Erzeugen (320) eines neuen Treibers auf Basis eines Treiberparameters:

b1) Einbetten (321) des neuen Steuercodes in eine Programm-Umgebung,

b2) Ermitteln (322) des Treiberparameters, indem eine Kommunikation zwischen dem neuen Steuercode und dem Gerät mittels des Schnittstellenwandlers und der Treiber-Schnittstelle nachgebildet wird, und daraus der Treiberparameter bestimmt wird,

c) Erzeugen (330) einer neuen Treiber-Umgebung, welche einen ersten Treiber und den neuen Treiber umfasst, und der neuen Treiber durch den Treiberparameter bestimmt ist,

d) Erzeugen (340) des neuen Programmcodes basierend auf einem ersten Programmcodes, wobei der erste Steuercode durch die Programm-Umgebung ersetzt wird, und die ersten Treiber-Umgebung durch die neue Treiber-Umgebung ersetzt wird,

e) Ausführen (350) des neuen Programmcodes und Ansteuern des Geräts.

FIG 6

**Beschreibung**

Die Erfindung betrifft ein Verfahren und eine Vorrichtung zum Ansteuern eines Geräts mit einem neuen Programmcode.

Ein Software-Ökosystem bietet typischerweise einen Marktplatz für Anwendungsprogramme, welche auch als Programmcodes oder Apps bezeichnet werden.

Im Consumer-Bereich können Android-Nutzer derzeit zwischen 2,8 Millionen Apps wählen. Apples App Store blieb mit 2,2 Millionen verfügbaren Apps der zweitgrößte App Store. Natürlich müssen Benutzer bei der Auswahl der richtigen App auf der Grundlage von Empfehlungen unterstützt werden.

Marktplätze für industrielle Ökosysteme wie Siemens MindSphere® oder B2B-Plattformen wie Siemens Kairos® werden derzeit entwickelt, und bald können Hunderte von Apps auf diesen Marktplätzen gehostet werden. Es wird jedoch nicht nur einen einzigen Markt geben, sondern verschiedene Marktplätze, die auf die Bedürfnisse bestimmter Bereiche zugeschnitten sind.

Beispiele für domänenspezifische Marktplätze sind:

- Prozessindustrien für die Papier-, Stahl- oder Pharmaerzeugung
- Digitale Fabriken in der Automobilindustrie, Maschinenbauer (OEMs) oder Engineering / Simulation
- Energiemanagement einschließlich Smart Grid, Datenanalyse und Integration in Szenarien mit intelligentem Gebäude

Es besteht der Bedarf, neue Programmcodes aus Markplätzen zu beziehen, statt Neuentwicklungen, beispielsweise bei der Umstellung von IT-Betriebssystemen oder beim Austausch von einzelnen Prozessvorrichtungen, durchzuführen.

Traditionelle Ansätze wie kollaborative oder inhaltsbasierte Filterung funktionieren in einem einzigen Markt gut, da sowohl das Abgleichen als auch das Ranking für alle Apps durchgeführt werden können. In einem domänenübergreifenden Marktplatz ist Matching und Ranking normalerweise auf eine bestimmte Domain beschränkt.

Andernfalls würde der Benutzer viele irrelevante Apps erhalten, die sich nicht auf seinen Marktplatz beziehen. Dies wird nicht als Einschränkung wahrgenommen, sondern als Fokus auf einen bestimmten Markt.

Auf einem domänenübergreifenden Marktplatz sind Apps hinsichtlich der Funktion des gesuchten Programmcode jedoch häufig kompatibel, jedoch Inkompatibilität hinsichtlich einer Nachrichten-Schnittstelle des Programmcodes und somit als nicht-kompatibel zum Ersetzen von bestehenden Programmcodes gilt. Zum Beispiel unterscheiden sich die Protokolle in der Energie Domaine (Smart Grid) von den in einer digitalen Fabrik eingesetzten Protokollen.

Beispiele sind Anwendungen im Smart City-Kontext, bei denen verschiedene Energieversorger wie das intelligente Gebäude und das intelligente Stromnetz in einem Energiemarkt zusammenwirken.

Mit anderen Worten bietet das Finden von Apps über Domänen hinweg neue Möglichkeiten für eine stärkere Wiederverwendung von Apps und neuartigen Anwendungen.

Es ist Aufgabe der Erfindung ein Verfahren und eine Vorrichtung zum Ansteuern eines Geräts mit einem neuen Programmcode bereitzustellen, wobei der neue Programmcode von einem Marktplatz mit mehreren Domänen bereitgestellt wird und hinsichtlich der Funktion zu einem vorhergehenden Programmcode kompatibel ist, jedoch eine Inkompatibilität hinsichtlich einer Nachrichten-Schnittstelle des Programmcodes aufweist.

Das Problem geeignete Apps zu finden, ist für "Internet of Things" (IoT) oder "Industrial Internet of Things" (IIoT) - und domänenübergreifende Marktplätze von großer Relevanz.

Bisherige Lösungen können die App-Relevanz nicht marktübergreifend automatisiert schätzen. Die Relevanz von Apps wird normalerweise nur für einen einzelnen Marktplatz berechnet. Daher wird es schwierig, Apps über Domänengrenzen hinweg zu finden und zu empfehlen.

Die erfindungsgemäße Aufgabe wird durch ein Verfahren gelöst, in welchem das Gerät von einem ersten Programmcode ansteuerbar ist, welcher bei dessen Ausführung, ausgehend von einem ersten Steuercode das Gerät mit Hilfe einer ersten Treiber-Umgebung, welche einen ersten Treiber umfasst, angesteuert, und folgende Schritte ausgeführt werden:

a) Ermitteln und Laden eines neuen Steuercodes mit einer Nachrichten-Schnittstelle aus einer Programmbibliothek unter Einbeziehung von Eigenschaften von Funktion und Schnittstelle des ersten Steuercodes,

b) Erzeugen eines neuen Treibers auf Basis zumindest eines Treiberparameters:

b1) Einbetten des neuen Steuercodes in eine Programm-Umgebung, in welcher der neue Steuercode bei Ausführung über die Nachrichten-Schnittstelle, einen Schnittstellenwandler und eine Treiber-Schnittstelle mit dem ersten Treiber kommuniziert,

b2) Ermitteln des zumindest einen Treiberparameters, indem eine Kommunikation zwischen dem neuen Steuercode und dem Gerät mittels des Schnittstellenwandlers und der Treiber-Schnittstelle nachgebildet wird, und daraus der zumindest eine Treiberparameter bestimmt wird,

c) Erzeugen einer neuen Treiber-Umgebung, welche den ersten Treiber und den neuen Treiber umfasst, und der neuen Treiber durch den zumindest einen Treiberparameter bestimmt ist,

d) Erzeugen des neuen Programmcodes basierend auf dem ersten Programmcodes, wobei der erste Steuercode durch die Programm-Umgebung ersetzt wird, und die ersten Treiber-Umgebung durch die neue Treiber-Umgebung ersetzt wird,

e) Ausführen des neuen Programmcodes und Ansteuern des Geräts.

Dadurch wird erreicht, dass die genannte Inkompatibilität der Nachrichten-Schnittstelle des neuen Programmcodes durch eine Anpassung der Treiber-Umgebung behoben wird.

Apps können durch überlappende Attribute oder durch das Zuordnen von Attributen zwischen Domänen identifiziert werden.

Dadurch kann die Effizienz in Bezug auf die Programmcode- bzw. App-Erkennung erhöht werden, indem Apps auf mehreren Marktplätzen gemeinsam genutzt werden können.

In einer Weiterbildung der Erfindung ist es vorgesehen, dass die erste Treiber-Umgebung eine erste Anwendungs-Schnittstelle und die neue Treiber-Umgebung eine neue Anwendungs-Schnittstelle, sowie vorzugsweise jeweils einen Event-Manager oder Message Broker umfassen. Dadurch wird erreicht, dass sehr verbreitete Architekturen für Systeme mit IIoT-Geräten verwendet werden können, die Implementierung vereinfacht und die Integrations-Kosten gesenkt werden können.

In einer Weiterbildung der Erfindung ist es vorgesehen, dass beim Erzeugen der neuen Treiber-Umgebung der erste Treiber mit dem zumindest einen Treiberparameter kompiliert wird, und in einer Bibliothek gespeichert wird, und beim Erzeugen der neuen Anwendungs-Schnittstelle der neue Treiber aus der Bibliothek geladen und mit der ersten Anwendungs-Schnittstelle kompiliert wird. Dadurch wird erreicht, dass der neue Programmcode auf eine einfache Weise erzeugt werden kann.

In einer Weiterbildung der Erfindung ist es vorgesehen, dass der erste und der neue Steuercode zum Schreiben von Daten und/oder Instruktionen zum Gerät und/oder Lesen von Daten und/oder Informationen vom Gerät vorgesehen ist. Dadurch wird erreicht, dass ein IIoT-Gerät flexibel für viele verschiedene Einsatzzwecke mit dem neuen Programmcode angesteuert werden kann.

In einer Weiterbildung der Erfindung ist es vorgesehen, dass nach dem Ermitteln des zumindest einen Treiberparameters im Schritt b) ein Verifizieren der Funktionalität und der Kompatibilität des neuen Steuercodes erfolgt. Dadurch wird erreicht, dass der neue Treiber geprüft wird, bevor er beispielsweise im Betrieb einer Produktionsanlage eingesetzt wird.

In einer Weiterbildung der Erfindung ist es vorgesehen, dass die Nachrichten-Schnittstelle und die Treiber-Schnittstelle eine Schnittstelle nach einem IoT Protokoll wie dem MQTT (Message Queuing Telemetry Transport)-Protokoll sind. Dadurch wird erreicht, dass die Anzahl potenziell geeigneter Apps erhöht wird, da auf einem weit verbreiteten IoT Standard, wie dem MQTT-Protokoll bei der Implementierung aufgebaut wird.

In einer Weiterbildung der Erfindung ist es vorgesehen, dass der Schnittstellenwandler ein Nachrichten-Broker. Dadurch wird erreicht, dass die Anzahl potenziell geeigneter Apps erhöht wird, da das weit verbreitete Konzept eines Nachrichten-Brokers implementiert wird.

In einer Weiterbildung der Erfindung ist es vorgesehen, dass beim Ermitteln neuen Steuercodes im Schritt a) folgende Schritte ausgeführt werden:

a1) Suche nach empfohlenen Programmcodes in zumindest zwei Marktplätzen unter Verwendung von GANs, wobei vordefinierte Kriterien hinsichtlich der Funktionalität bei der Ansteuerung des Geräts, sowie eine Kompatibilität zu der Nachrichten-Schnittstelle berücksichtigt werden,

a2) Automatische Analyse von Programmcode-Marktplatz Anforderungsmuster

a3) Rating von Programmcodes

Dadurch wird erreicht, dass eine über mehrere Marktplätze hinweg der neue Programmcode gesucht wird.

Mit GAN werden "Generative Adversarial Networks" bezeichnet, welche aus zwei künstlichen neuronalen Netzwerken, die ein Nullsummenspiel durchführen, bestehen. Eines davon erstellt Kandidaten (der Generator), das zweite neuronale Netzwerk bewertet die Kandidaten (der Diskriminator). Typischerweise bildet der Generator von einem Vektor aus latenten Variablen auf den gewünschten Ergebnisraum ab. Das Ziel des Generators ist es zu lernen, Ergebnisse nach einer bestimmten Verteilung zu erzeugen. Der Diskriminator wird hingegen darauf trainiert, die Ergebnisse des Generators von den Daten aus der echten, vorgegebenen Verteilung zu unterscheiden. Die Zielfunktion des Generators besteht dann darin, Ergebnisse zu erzeugen, die der Diskriminator nicht unterscheiden kann. Dadurch soll sich die erzeugte Verteilung nach und nach der echten Verteilung angleichen.

In einer Weiterbildung der Erfindung ist es vorgesehen, dass das Rating von Programmcodes im Schritt a) erfolgt, indem die Relevanz eines Programmcodes am zumindest einen Marktplatz mit dem Zusammenhang

$$R(a;C) = \propto \sum_{c \in C} w_c\, p(c|a) + (1 - \alpha)\, Reco(a)$$

beschrieben werden kann, wobei

$R(a;C)$     die Relevanz eines Programmcodes/ einer App a bei einer gegebenen Menge an Clustern C ist, angegeben durch eine Benutzeranfrage oder ein Profil,

$\propto$     ein Parameter zur Gewichtung der vorhergesagten Relevanz gegenüber durch $Reco(a)$ angegebenen Community-Bewertungen,

$w_c$     das Gewicht eines Clusters $c \in C$, wobei $w_1 + w_2 = 1$,

$p(c|a)$     die (Klassen-) Wahrscheinlichkeit, die durch das ML-Modell bei Programmcode/ App a vorhergesagt wird,

$Reco(a)$     die Relevanz, abgeleitet von Ratings im Rahmen des ursprünglichen Marktplatzes von a, ist,

und für die Programmcodes für den Zielmarktplatz die Relevanz bestimmt wird und der Programmcode mit der höchsten Relevanz zum neuen Programmcode bestimmt wird.

Dadurch wird erreicht, dass bestimmte Apps, welche in verschiedenen Domänen verwendet werden können und so neue Möglichkeiten für Innovation und Optimierung bieten, gefunden und integriert werden können.

Eine auf "Generative Adversarial Network" (GAN) basierende Methodik, die maschinelle Lerntechniken einsetzt, um zu lernen, wie Apps über Marktplätze hinweg bewertet werden.

Es ist sehr wahrscheinlich, dass Siemens verschiedene Marktplätze für seine Ökosysteminitiativen und -plattformen beherbergen wird, da Siemens eine tiefe vertikale Integration in verschiedene Bereiche hat. Diese Domänen weisen Unterschiede auf, haben aber auch Gemeinsamkeiten.

Diese Gemeinsamkeiten können bei der gemeinsamen Nutzung von Apps über Domänengrenzen hinweg ausgenutzt werden. Dies würde Siemens den Vorteil verschaffen, eine reichhaltigere Anzahl von Apps in einzelnen Domänen bereitzustellen.

Die Aufgabe der Erfindung wird auch durch eine Vorrichtung zum Ansteuern eines Geräts mit einem neuen Programmcode gelöst, wobei das Gerät dazu eingerichtet ist, von einem ersten Programmcode angesteuert zu werden, welcher einen ersten Steuercode und eine erste Treiber-Umgebung, welche einen ersten Treiber umfasst, aufweist, und die Verfahrensschritte nach dem erfindungsgemäßen Verfahren ausführbar sind.

Die Erfindung wird nachfolgend anhand eines in den beigeschlossenen Zeichnungen dargestellten Ausführungsbeispiels näher erläutert. In den Zeichnungen zeigt:

Fig. 1-6     eine schematische Darstellung eines Ausführungsbeispiels mit Verfahrensschritten des erfindungsgemäßen Verfahrens,

Fig. 7     eine grundsätzliche Darstellung des GAN-Verfahrens,

Fig. 8-10     ein Beispiel eines Pseudo-Codes für eine GAN-Implementierung in eine Marktplatz-Umgebung,

Fig. 11     ein Beispiel eines Pseudo-Codes für ein Clustering,

Fig. 12     eine Darstellung des Marktplatzverhalten von Programmcodes,

Fig. 13-15     eine schematische Darstellung eines Ausführungsbeispiels für einen Marktplatz für Programmcodes mit Verfahrensschritten des erfindungsgemäßen Verfahrens.

Im Weiteren wird der Begriff "Programmcode" verwendet, welcher auch als Anwendungsprogramm (englisch "application" oder "app"), als Code-Sequenz oder Computerprogramm bezeichnet werden kann.

Als Marktplatz wird auch eine Programmbibliothek oder ein App Store bezeichnet, welcher häufig in einer Cloud gebildet ist.

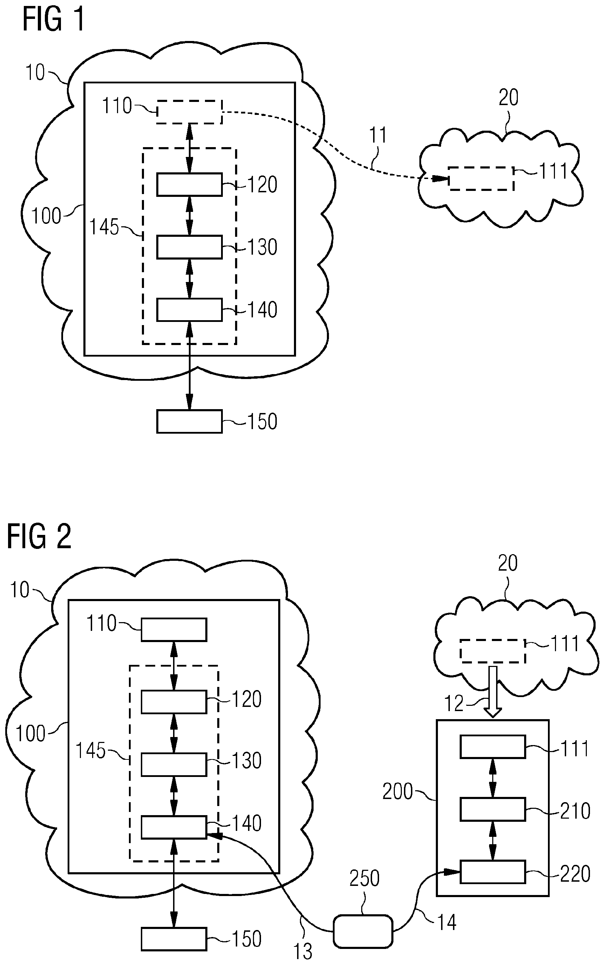

**Fig. 1, Fig. 2** und **Fig. 3** zeigen schematisch ein Ausführungsbeispiel der Erfindung mit einem Verfahren 300 zum Ansteuern eines Geräts 150 mit einem neuen Programmcode 101.

Das Gerät 150 ist von einem ersten Programmcode 100 ansteuerbar, welcher bei dessen Ausführung, ausgehend von einem ersten Steuercode 110 das Gerät 150 mit Hilfe einer ersten Treiber-Umgebung 145, welche einen ersten Treiber 140 umfasst, angesteuert.

Folgende Schritte werden ausgeführt:

a) Ermitteln 310 und Laden eines neuen Steuercodes 111 mit einer Nachrichten-Schnittstelle 210 aus einer Programmbibliothek, beispielsweise einem Marktplatz in einer Cloud 20, unter Einbeziehung von Eigenschaften von Funktion und Schnittstelle des ersten Steuercodes,

b) Erzeugen 320 eines neuen Treibers 141 auf Basis zumindest eines Treiberparameters:

b1) Einbetten 321 des neuen Steuercodes 111 in eine Programm-Umgebung 200, in welcher der neue Steuercode 111 bei Ausführung über die Nachrichten-Schnittstelle 210, einen Schnittstellenwandler 220 und eine Treiber-Schnittstelle 250 mit dem ersten Treiber 140 kommuniziert,

b2) Ermitteln 322 des zumindest einen Treiberparameters, indem eine Kommunikation zwischen dem neuen Steuercode 111 und dem Gerät 150 mittels des Schnittstellenwandlers 220 und der Treiber-Schnittstelle 250 nachgebildet wird, und daraus der zumindest eine Treiberparameter bestimmt wird,

c) Erzeugen 330 einer neuen Treiber-Umgebung 146, welche den ersten Treiber 140 und den neuen Treiber 141 umfasst, und der neuen Treiber 141 durch den zumindest einen Treiberparameter bestimmt ist,

d) Erzeugen 340 des neuen Programmcodes 101 basierend auf dem ersten Programmcodes 100, wobei der erste Steuercode 110 durch die Programm-Umgebung 200 ersetzt wird, und die ersten Treiber-Umgebung 145 durch die neue Treiber-Umgebung 146 ersetzt wird,

e) Ausführen 350 des neuen Programmcodes 101 und Ansteuern des Geräts 150.

Es wird ausgehend vom ersten Programmcode 100 mit dem ersten Steuercode 110, welche in einer Cloud 10 gespeichert sind, Funktionalitäts- und Kompatibilitätsparameter erfassen und daraus der neue Programmcode 111 auf einem Marktplatz in einer Cloud 20 ermittelt und aus der Cloud 20 in einem Schritt 12 geladen und im Schritt 321 in die Programm-Umgebung 200 eingebettet.

Im Schritt 13 wird der erste Treiber 140 über die Treiber-Schnittstelle 250, und dieser wiederum im Schritt 14 mit dem Nachrichten-Wandler 220 gekoppelt.

Im Schritt 15 wird die erste Anwendungs-Schnittstelle 120 über den neuen Treiber 141 im Schritt 16 mit dem Nachrichten-Wandler 220 gekoppelt, wobei der neue Treiber 141 im

Schritt 17 mit der Treiber-Schnittstelle 250 beispielsweise über eine Daten-Lieferung kommunizieren kann, sowie die Treiber-Schnittstelle 250 im Schritt 18 mit dem Nachrichten-Wandler 220 beispielsweise über eine Anforderung kommunizieren kann.

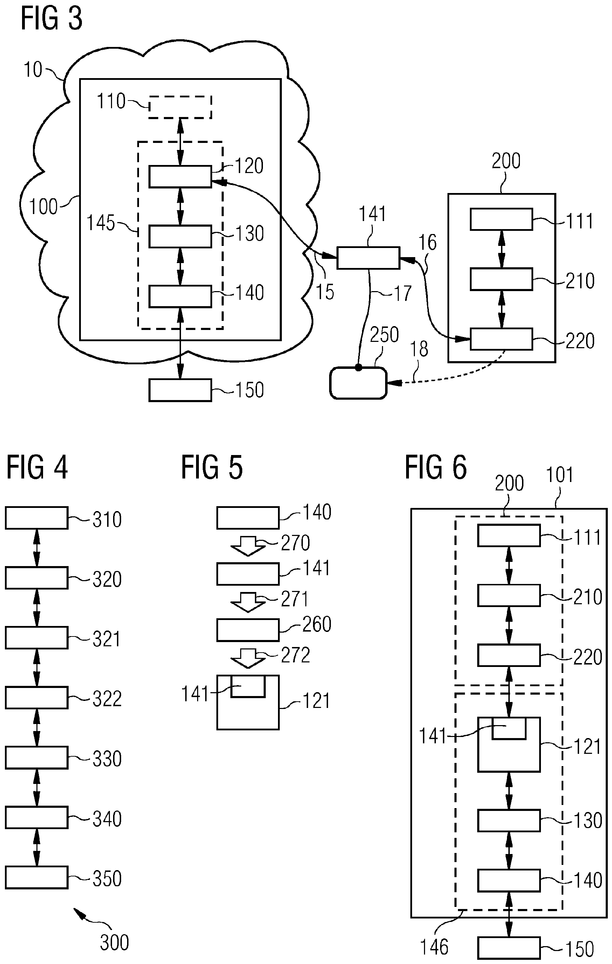

**Fig. 4** zeigt schematisch das erfindungsgemäße Verfahren 300.

Die erste Treiber-Umgebung 145 umfasst eine erste Anwendungs-Schnittstelle 120 und die neue Treiber-Umgebung 146 eine neue Anwendungs-Schnittstelle 121.

Ferner ist jeweils ein Event-Manager 130 umfasst.

In **Fig. 5** ist der Ablauf zum Erzeugen der neuen Treiber-Umgebung 146 dargestellt.

Beim Erzeugen der neuen Treiber-Umgebung 146 wird der erste Treiber 140 mit dem zumindest einen Treiberparameter kompiliert 270 und in einer Bibliothek 260 gespeichert 271.

Beim Erzeugen der neuen Anwendungs-Schnittstelle 121 wird der neue Treiber 141 aus der Bibliothek 260 geladen 272 und mit der ersten Anwendungs-Schnittstelle 120 kompiliert.

**Fig. 6** zeigt schematisch den Aufbau des neuen Programmcodes 101.

Der erste und der neue Steuercode 110, 111 ist zum Schreiben von Daten und/oder Instruktionen zum Gerät

150 und/oder Lesen von Daten und/oder Informationen vom Gerät 150 vorgesehen. Nach dem Ermitteln 322 des zumindest einen Treiberparameters im Schritt b2) erfolgt optional ein Verifizieren der Funktionalität und der Kompatibilität des neuen Steuercodes 111.

Die Nachrichten-Schnittstelle 210 und die Treiber-Schnittstelle 250 sind jeweils Schnittstellen nach dem MQTT-Protokoll.

Der Schnittstellenwandler 220 ist ein Nachrichten-Broker ("Message-Broker").

Beim Ermitteln 310 neuen Steuercodes 111 werden im Schritt a) folgende Schritte ausgeführt:

a1) Suche nach empfohlenen Programmcodes in zumindest zwei Marktplätzen unter Verwendung von GANs, wobei vordefinierte Kriterien hinsichtlich der Funktionalität bei der Ansteuerung des Geräts 150, sowie eine Kompatibilität zu der Nachrichten-Schnittstelle 210, berücksichtigt werden,

a2) Automatische Analyse von Programmcode-Marktplatz Anforderungsmuster

a3) Rating von Programmcodes

Im Weiteren wird auf diese Schritte näher eingegangen:

**a1) Suche nach empfohlenen Programmcodes in Marktplätzen unter der Verwendung von GANs:**

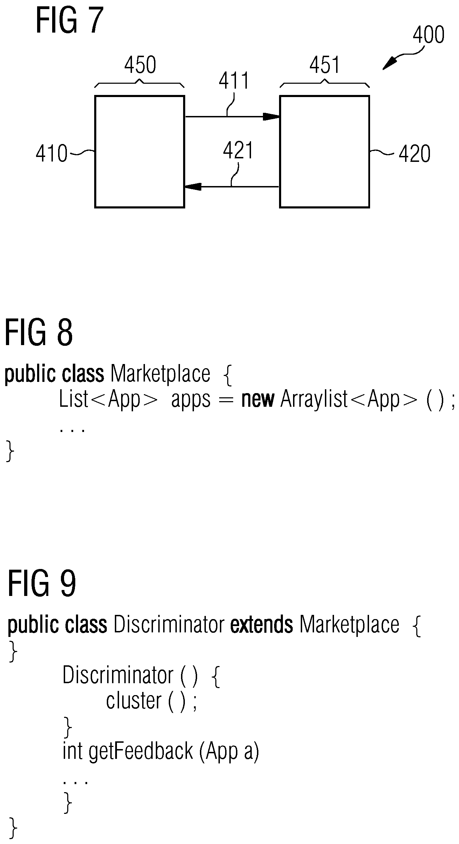

In **Fig. 7** ist das bekannte GAN-Verfahren dargestellt. "Generative Adversarial Networks" (GAN, deutsch "erzeugende gegnerische Netzwerke") sind in der Informatik eine Gruppe von Algorithmen zu unüberwachtem Lernen.

Generative gegnerische Netzwerke sind eine Klasse von Algorithmen im Bereich der künstlichen Intelligenz, die beim unüberwachten maschinellen Lernen verwendet werden.

Generative Adversarial Networks bestehen aus zwei künstlichen neuronalen Netzwerken, die ein Nullsummenspiel durchführen. Eines davon erstellt Kandidaten (ein Generator 410), das zweite neuronale Netzwerk bewertet die Kandidaten (der Diskriminator 420). Typischerweise bildet der Generator von einem Vektor aus latenten Variablen auf einen gewünschten Ergebnisraum ab. Das Ziel des Generators 410 ist es zu lernen, Ergebnisse 411 nach einer bestimmten Verteilung zu erzeugen. Der Diskriminator 420 wird mittels einem Feedback 421 hingegen darauf trainiert, die Ergebnisse des Generators 410 von den Daten aus der echten, vorgegebenen Verteilung zu unterscheiden. Die Zielfunktion des Generators 410 besteht dann darin, Ergebnisse 411 zu erzeugen, die der Diskriminator nicht unterscheiden kann. Dadurch soll sich die erzeugte Verteilung nach und nach der echten Verteilung angleichen.

Der Generator 410 bildet einen ersten Marktplatz 451 ab und der Diskriminator 420 bildet einen zweiten Marktplatz 452 ab.

Es soll getestet werden, ob ein Programmcode am zweiten Marktplatz 452 auch am ersten Marktplatz 451 ein wertvolles Angebot darstellt, beispielsweise ein bestimmter Programmcode, welcher sich ursprünglich am zweiten Marktplatz 452 befindet, auch für Benutzer am ersten Marktplatz 451 empfohlen werden kann.

Das Konzept generativer gegnerischer Netzwerke GAN kann nun angewandt werden. Es sollte aus der Sicht des zweiten Marktplatzes 452 keine Annahme über die Relevanz des Programmcodes gemacht werden, da der erste und zweite Marktplatz 451, 452 in zwei verschiedene Domänen gelegen sind.

Für die Bestimmung der Relevanz des Programmcodes am ersten Marktplatz 451 ist die Relevanzschätzung des ersten Marktplatzes 451 zuständig.

Der zweite Marktplatz 452 soll ein Modell lernen, um die Relevanz seines Programmcodes für den ersten Marktplatz 451 vorherzusagen. Aus Sicht des zweiten Marktplatzes 452 ist der erste Marktplatz 451 jedoch eine "Blackbox".

Der erste Marktplatz 451 ist der Diskriminator 420 und der zweite Marktplatz 452 der Generator 410. Das Ziel des Generator 410 ist es, ein genaues Modell der Programmcode-Relevanz zu lernen, ohne den ersten Marktplatz 451 zu untersuchen.

In diesem Sinne ist der Generator 410 "blind" und kann sein Programmcode-Relevanzmodell nur basierend auf Rückmeldungen 421 des Diskriminators 420 aktualisieren. Dies ist genau der Begriff von GAN, wird jedoch hier in einem neuartigen domänenübergreifenden Empfehlungskontext für einen Programmcode angewendet.

Der Generator 410 bestimmt einen relevanten Programmcode aus dem Kontext des zweiten Marktplatzes 452 und gibt ein Angebot 411 an den Diskriminator 420.

Der Diskriminator 420 bestimmt die Relevanz des jeweiligen Programmcodes am ersten Marktplatz 451 und gibt Feedback 421.

Dieser gesamte Ansatz wird als Nullsummenspiele modelliert, die auch als Minimax-Spiele bezeichnet werden. In einem Zwei-Personen-Nullsummenspiel kann eine Person nur gewinnen, wenn der andere Spieler verliert.

Es kann davon ausgegangen werden, dass Funktionen eines Programmcodes semantisch identifiziert werden können und Matching über Marktplätze hinweg durchgeführt werden kann.

Fig. 8 bis 10 zeigen Beispiele von Pseudo-Codes für eine GAN-Implementierung in eine Marktplatz-Umgebung.

**Fig. 8** zeigt einen Pseudo-Code für eine Implementierung eines allgemeinen Marktplatzes, welcher eine Liste von IIoT-Programmcodes zur Verfügung stellt. Der Marktplatz ist einer oder mehreren Domänen zugeordnet.

**Fig. 9** zeigt einen Pseudo-Code für eine Implementierung eines Diskriminators den Markt um zusätzliche Funktionen erweitert.

Der Diskriminator 420 führt ein Clustering von Programmcodes anhand ihrer Funktionen durch, indem die Wichtigkeit bestimmter Funktions-Cluster nach Bedarf eingestuft wird.

Der Diskriminator 420 bietet eine getFeedback()-Methode, um dem Generator 410 Feedback 421 zur Relevanz eines bestimmten Programmcodes zu geben.

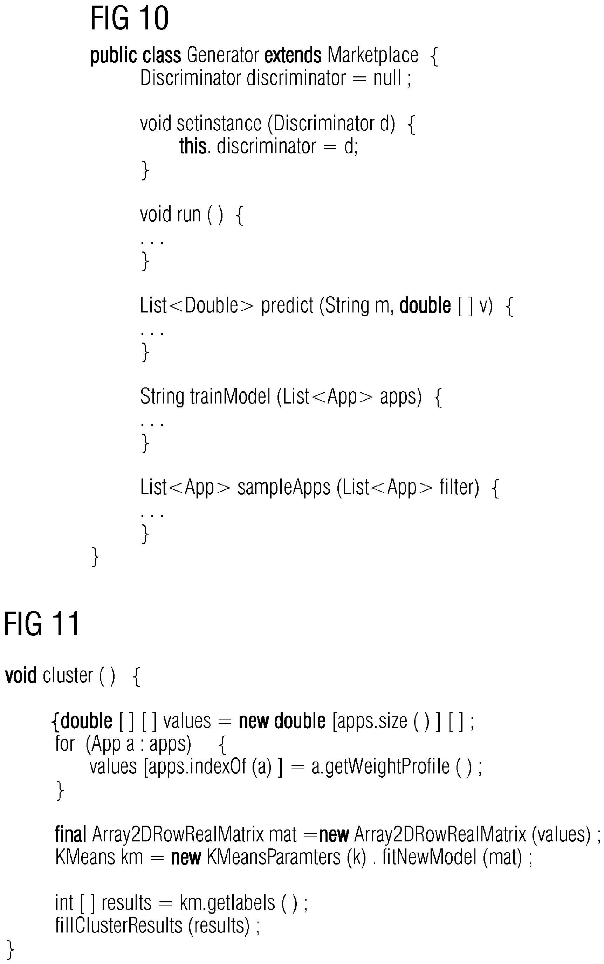

**Fig. 10** zeigt einen Pseudo-Code für eine Implementierung eines Generators.

Der Generator 410 erweitert den Markt um Vorhersagefunktionen und wird einer Diskriminatorinstanz unter Verwendung der Methode setinstance() zugeordnet.

Die Methode run() wird n-mal ausgeführt, bis ein gutes Modell von Programmcode-Relevanz in Bezug auf den Diskriminator-Marktplatz abgeleitet wurde.

Das predict()-Verfahren berechnet Klassenwahrscheinlichkeiten auf der Grundlage eines bestimmten maschinellen Lernmodells m und des Programmcode-Merkmalsgewichtungsvektors v.

Klassenwahrscheinlichkeit bedeutet, dass die Wahrscheinlichkeit $p(c|a)$ des Programmcodes a zu einem Cluster c gehört.

Die Methode trainModel() erstellt ein Anfangs-ML-Modell, beispielsweise unter Verwendung von Techniken wie SVM, Random Forest oder (Deep) Neural Networks), um Programmcode-Cluster vorherzusagen.

Das Modell kann durch Rückmeldung 421 des Diskriminators 420 inkrementell aktualisiert und verbessert werden, beispielsweise unter Verwendung zusätzlicher Trainingsdaten oder mittels Backpropagation, um Gewichte in neuronalen Netzen anzupassen.

Die Methode sampleApps() testet n Apps bzw. Programmcodes vom zweiten Marktplatz 452 des Generators 410. Diese Teilmenge wird für ein erstes Training des ML-Modells verwendet.

GAN für Programmcode-Marktplätze bietet eine sehr elegante Methode, um herauszufinden, welche Art von Apps von Marktplätzen gemeinsam genutzt werden sollten.

Programmcode-Relevanzmodelle werden gemäß Peer-2-Peer (P2P) zwischen Marktplatzpaaren erstellt, die immer nach dem Diskriminator- und Generator-Muster modelliert werden.

Der GAN-Ansatz basiert auf unbeaufsichtigten ML-Techniken und das P2P-Netzwerk von Marktplätzen kann daher flexibel aufgebaut werden.

**a2) Automatische Analyse von Programmcode-Marktplatz Anforderungsmuster:**

Der Diskriminator 420 führt basierend auf Programmcode-Funktionen ein Clustering durch.

**Fig. 11** zeigt einen Pseudo-Code für ein Clustering.

Vereinfacht können für eine feste Menge von Programmcode-Funktionen jeweilige Funktions-Gewichts-Profile erstellt werden, welche mit dem jeweiligen Programmcode in Verbindung gebracht werden können, wie in Tabelle 1 beispielhaft gezeigt.

Tabelle 1: Programmcode- Funktionen und Funktions-Gewichte

| Programmcode (App) | Funktion 1 | Funktion 2 | Funktion 3 |
|---|---|---|---|
| A1 | 0.5 | 0.3 | 0.6 |
| A2 | 0.3 | 0.7 | 0.1 |

Der Programmcode A1 weist demnach ein Funktions-Gewichts-Profil von [0.5,0.3,0.6] auf und kann hinsichtlich einer Funktion-Ähnlichkeit mit anderen Programmcodes am Marktplatz verglichen werden. Sehr ähnliche Programmcodes können in einem Cluster gruppiert werden.

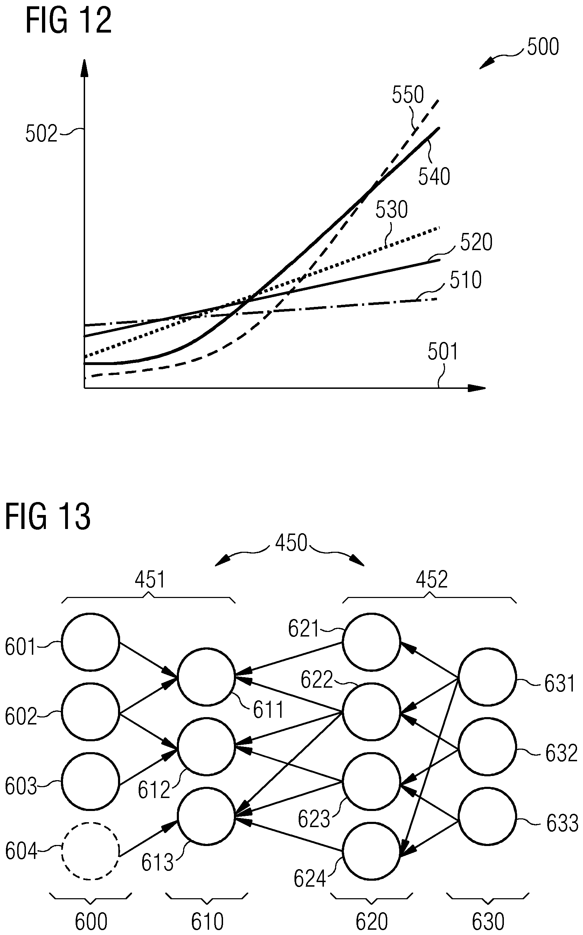

**Fig. 12** zeigt Beispiele von Marktplatzverhalten 500 von Programmcodes mit Nachfrage- und Wachstumsmustern an Programmcode-Marktplätzen.

Die Cluster sind mit Nachfrage- oder Wachstumsmustern verknüpft, um zu ermitteln, ob Anwendungen über Domänen hinweg gemeinsam genutzt werden müssen. Zum Beispiel ist es nicht sinnvoll, ein Programmcode vom zweiten Marktplatz 452 vorzuschlagen, wenn die Nachfrage nach ähnlichen Programmcodes bereits gesättigt ist. Das gemeinsame Teilen von Programmcodes macht nur dann Sinn, wenn eine unzufriedenstellende Nachfrage besteht.

Im Diagramm 500 wird die Nachfrage 501 an Programmcodes in Abhängigkeit vom Angebot 502 an Programmcodes verschiedener Cluster 510-550 dargestellt.

Cluster 550 hat zum Beispiel eine hohe Nachfrage bzw. ein starkes Wachstumsprofil mit einem exponentiellen Kurvenverlauf, Cluster 510 eine geringe Nachfrage, bzw. ein moderates Wachstumsprofil.

Das Wachstumsprofil kann beispielsweis basierend auf der durchschnittlichen Anzahl der Downloads $\partial DL/\partial t$, der kumulierte Programmcode-Umsatz $\partial R/\partial t$ usw., jeweils über einen bestimmten Zeitraum festgelegt, werden. Dann kann ein Cluster hinsichtlich der Marktbedeutung bewertet werden.

Wenn beispielsweise in Cluster 5 nur wenige Programmcodes bereitgestellt werden, kann seine Bedeutung als hoch eingestuft werden.

Wenn eine vom Generator 410 vorhergesagter Programmcode in einen Cluster wie Cluster 5 fällt, würde der Generator 410 ein sehr positives Feedback erhalten. Daher lernt der Generator 410 aus Sicht des Diskriminators 420 relevant.

Dieses Modell ist für die einzelnen Marktinstanzen relevant, welche den Generator 410 und den Diskriminators 420 realisieren.

**a3) Rating von Programmcodes:**

Die vorhergehenden Schritte zur Vorhersage der Relevanz eines Programmcodes von dem zweiten Marktplatz 452 im ersten Markplatz 451 werden anhand des GAN Generator- und Diskriminator-Musters unterstützt.

Durch das Clustering von Programmcodes am ersten Markplatz 451 und die Bewertung von Clustern kann die Relevanz des Programmcodes am zweiten Marktplatz 452 am ersten Markplatz 451 bestimmt werden.

Ein einheitliches Programmcode-Rating-Modell zur Ermittlung relevanter Programmcode am zweiten Marktplatz 452 basiert auf der Relevanz am ersten und zweiten Marktplatz 451, 452.

**Fig. 13** zeigt Beispiele für Marktplätze.

Der erste Marktplatz 451 umfasst eine erste Programmcode-Gruppe 600 mit Programmcodes 601, 602, 603 und einem veralteten Programmcode 604 und eine Cluster-Gruppe 600 mit Clustern 611, 612, 613.

Der zweite Marktplatz 452 nimmt die Rolle des Generators 410 und der erste Marktplatz 451 die Rolle des Diskriminators 420 ein.

Unter Verwendung des vorgenannten ML-Ansatzes werden Verbindungen einer zweiten Programmcode-Gruppe 620 mit Programmcodes 621, 622, 623, 624 des zweiten Marktplatzes 452 hergestellt.

Drei Programmcodes 621, 622, 622 am zweiten Marktplatz 452 könnten Funktionen bereitstellen, die im Cluster 613 relevant sind.

Angenommen, Programmcodes in der zweiten Programmcode-Gruppe 620 werden von Benutzern 631, 632, 633 einer Benutzer-Gruppe 630 am zweiten Marktplatz 452 bewertet.

Die Relevanz eines Programmcodes in einem bestimmten Zielmarkt/ Zielmarktplatz und insbesondere im Zusammenhang mit einem einzelnen Cluster oder einer Gruppe von Clustern, auf denen ein Bedarf ermittelt wurde, wird angegeben als:

$$R(a;C) = \propto \sum_{c \in C} w_c\, p(c|a) + (1 - \alpha)\, Reco(a)$$

wobei

$R(a;C)$     die Relevanz eines Programmcodes/ einer App a bei einer gegebenen Menge an Clustern C ist, angegeben durch eine Benutzeranfrage oder ein Profil,

$\propto$     ein Parameter zur Gewichtung der vorhergesagten Relevanz gegenüber durch $Reco(a)$ angegebenen Community-Bewertungen,

$w_c$     das Gewicht eines Clusters $c \in C$, wobei $w_1 + w_2 = 1$,

$p(c|a)$     die (Klassen-) Wahrscheinlichkeit, die durch das ML-Modell bei Programmcode/ App a vorhergesagt wird,

$Reco(a)$     die Relevanz, abgeleitet von Ratings im Rahmen des ursprünglichen Marktplatzes von a, ist.

$Reco(a)$ kann anhand von Begriffen berechnet werden, die im Zusammenhang mit der zweiteiligen Netzwerkprojektion und der persönlichen Empfehlung bekannt sind.

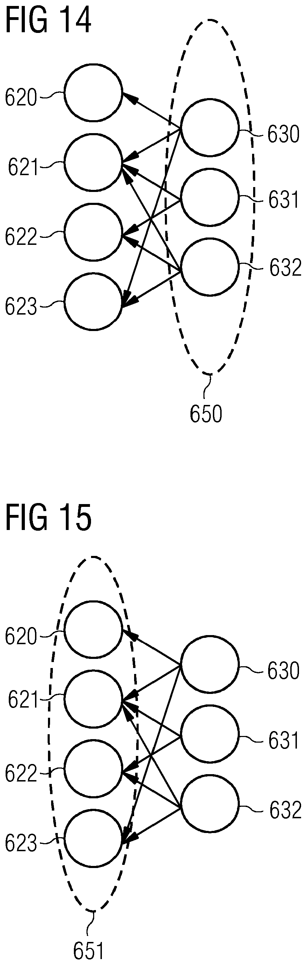

In **Fig. 14** ist die Programmcode-Gruppe 620 mit den Programmcodes 621, 622, 623, 624 und die Benutzer-Gruppe 630 mit den Benutzern 631, 632, 633 des zweiten Marktplatzes 452 der Fig. 13 dargestellt, in welcher ein erster Verfahrensschritt 650 ausgeführt wird.

Dabei wird davon ausgegangen, dass jeder Programmcode ein "Token" hat, das mit den Benutzern geteilt werden kann, mit denen der Programmcode verbunden ist.

Das Token fließt vom Programmcode zu den verbundenen Benutzern, geteilt durch die Anzahl der Benutzer, mit denen der Programmcode verbunden ist (der Grad des Programmcodes).

Das Ergebnis daraus ist:

$$\text{Benutzer } 631 = \text{Programmcodes}$$
$$(621 + 622 * \tfrac{1}{3} + 624 * \tfrac{1}{2})$$

$$\text{Benutzer } 632 = \text{Programmcodes}$$
$$(622 * \tfrac{1}{3} + 623 * \tfrac{1}{2})$$

$$\text{Benutzer } 633 = \text{Programmcodes}$$
$$(622 * \tfrac{1}{3} + 623 * \tfrac{1}{2} + 624 * \tfrac{1}{2})$$

In **Fig. 15** ist die Programmcode-Gruppe 620 und die Benutzer-Gruppe 630 der Fig. 13 dargestellt, in welcher ein zweiter Verfahrensschritt 651 ausgeführt wird.

Dabei wird analog zum ersten Schritt 650 vorgegangen, jedoch von der rechten Partition (Benutzer) zur linken Partition (Programmcodes/ Apps). Der Fluss wird wiederum durch den Grad des Benutzers geteilt.

Das Ergebnis daraus sind neue Programmcodes 641-644:

$$\text{Programmcode } 641 = \text{Programmcodes}$$
$$(621 + 622 * \tfrac{1}{3} + 624 * \tfrac{1}{2}) * \tfrac{1}{3}$$

$$\text{Programmcode } 642 = \text{Programmcodes}$$
$$(621 + 622 * \tfrac{1}{3} + 624 * \tfrac{1}{2}) * \tfrac{1}{3} +$$
$$(622 * \tfrac{1}{3} + 623 * \tfrac{1}{2}) * \tfrac{1}{2} +$$
$$(622 * \tfrac{1}{3} + 623 * \tfrac{1}{2} + 624 * \tfrac{1}{2}) * \tfrac{1}{3}$$

$$\text{Programmcode } 643 = \text{Programmcodes}$$
$$(622 * \tfrac{1}{3} + 623 * \tfrac{1}{2}) * \tfrac{1}{2} +$$
$$(622 * \tfrac{1}{3} + 623 * \tfrac{1}{2} + 624 * \tfrac{1}{2}) * \tfrac{1}{3} +$$
$$(621 + 622 * \tfrac{1}{3} + 624 * \tfrac{1}{2}) * \tfrac{1}{3} +$$
$$(622 * \tfrac{1}{3} + 623 * \tfrac{1}{2} + 624 * \tfrac{1}{2}) * \tfrac{1}{3}$$

$$\text{Programmcode } 644 = \text{Programmcodes}$$
$$(621 + 622 * \tfrac{1}{3} + 624 * \tfrac{1}{2}) * \tfrac{1}{3} +$$
$$(622 * \tfrac{1}{3} + 623 * \tfrac{1}{2} + 624 * \tfrac{1}{2}) * \tfrac{1}{3}$$

Die Ergebnisse des zweiten Verfahrensschritt 651 können als Matrix umgeschrieben werden:

$$
Programmcode \begin{pmatrix} 641 \\ 642 \\ 643 \\ 644 \end{pmatrix} = \begin{pmatrix} 1/3 & 1/9 & 0 & 1/6 \\ 1/3 & 7/18 & 5/12 & 2/6 \\ 1/3 & 9/18 & 7/12 & 3/6 \\ 1/3 & 2/9 & 1/6 & 2/6 \end{pmatrix} \cdot Programmcode \begin{pmatrix} 621 \\ 622 \\ 623 \\ 624 \end{pmatrix}
$$

Der Vektor mit dem neuen Programmcode 641-644 auf der linken Seite zeigt die resultierenden Bedeutungswerte für entsprechende Programmcodes 621-624.

Die 4x4-Matrix stellt die Gewichte dar, die auf der oben dargestellten zweistufigen Ausbreitung basieren, und der Vektor auf der rechten Seite der entsprechenden Programmcodes 621-624.

Im obigen Beispiel würde dies folgende Ergebnisse für *Reco(a)* ergeben, vorausgesetzt, dass jede Kante zwischen der Programmcode-Gruppe 620 und der Benutzer-Gruppe 630 gleich stark gewichtet wird:

$$
\text{Programmcode } 641 = 1/3 + 1/9 + 0 + 1/6 = 0.61
$$

$$
\text{Programmcode } 642 = 1/3 + 7/18 + 5/12 + 2/6 = 1.47
$$

$$
\text{Programmcode } 643 = 1/3 + 9/18 + 7/12 + 3/6 = 1.92
$$

$$
\text{Programmcode } 644 = 1/3 + 2/9 + 1/6 + 2/6 = 1.06
$$

Angesichts der Teilmenge passender Programmcodes 622, 623, 624 ist aus Sicht des zweiten Marktplatzes 452 der Programmcode 623 zu empfehlen.

Die Gesamtbewertung wird durch *R(a;C)* gegeben, was von der Vorhersage des ML-Modells abhängt.

**Bezugszeichenliste:**

| | |
|---|---|
| 10, 20 | Cloud |
| 11 | Funktionalitäts- und Kompatibilitätsparameter erfassen und daraus neuen Programmcode ermitteln |
| 12 | Lades des neuen Programmcodes in Umgebung |
| 13 | Anbindung an Treiber-Schnittstelle |
| 14 | Anbindung an Nachrichten-Schnittstelle |
| 15 | Anbindung an API-Schnittstelle |
| 16 | Anbindung an Nachrichten-Wandler |
| 17 | Anbindung an neuen Treiber |
| 18 | Anbindung an MQTT-Protokoll |
| 100, 101 | Programmcode |
| 110, 111 | Steuercode |
| 120, 121 | Anwendungs-Schnittstelle, Programmier-Schnittstelle, API |
| 130 | Event Manager |
| 140, 141 | Treiber |
| 145, 146 | Treiber-Umgebung |
| 150 | Gerät |

| 200 | Programm-Umgebung |
| 210 | Nachrichten-Schnittstelle, REST (Representional State Transfer) |
| 220 | Schnittstellen-Wandler, Nachrichten-Broker, MB (Message Broker) |
| 250 | Treiber-Schnittstelle, MQTT Protokoll |
| 260 | Bibliothek |
| 270 | Kompilieren |
| 271 | Speichern in externe Bibliothek |
| 272 | Laden aus externer Bibliothek |
| 300 | Verfahren |
| 310 | Ermitteln und Laden eines neuen Steuercodes |
| 320 | Erzeugen eines neuen Treibers |
| 321 | Einbetten des neuen Steuercodes in eine Programm-Umgebung |
| 322 | Ermitteln des zumindest einen Treiberparameters |
| 330 | Erzeugen einer neuen Treiber-Umgebung |
| 340 | Erzeugen des neuen Programmcodes |
| 350 | Ausführen des neuen Programmcodes und Ansteuern des Geräts |
| | |
| 400 | GAN Funktionsprinzip |
| 410 | Generator |
| 411 | Angebot, Ergebnis |
| 420 | Diskriminator |
| 421 | Feedback |
| 450 | Marktplatz-Menge |
| 451, 452 | Marktplatz |
| | |
| 500 | Marktplatzverhalten |
| 501 | Nachfrage an Programmcode/Apps |
| 502 | Angebot an Programmcode/Apps |
| 510-550, 600, 620 | Programmcode-Gruppe |
| 610 | Cluster-Gruppe |
| 611-613 | Cluster |
| 601-604, 621-624, 641-644 | Programmcode/Apps |
| 630 | Benutzer-Gruppe |
| 631-633 | Benutzer |
| 650, 651 | Verfahrensschritte |

**Patentansprüche**

1. Verfahren (300) zum Ansteuern eines Geräts (150) mit einem neuen Programmcode (101), wobei das Gerät (150) von einem ersten Programmcode (100) ansteuerbar ist, welcher bei dessen Ausführung, ausgehend von einem ersten Steuercode (110) das Gerät (150) mit Hilfe einer ersten Treiber-Umgebung (145), welche einen ersten Treiber (140) umfasst, angesteuert, und folgende Schritte ausgeführt werden:

a) Ermitteln (310) und Laden eines neuen Steuercodes (111) mit einer Nachrichten-Schnittstelle (210) aus einer Programmbibliothek (20) unter Einbeziehung von Eigenschaften von Funktion und Schnittstelle des ersten Steuercodes,
b) Erzeugen (320) eines neuen Treibers (141) auf Basis zumindest eines Treiberparameters:

b1) Einbetten (321) des neuen Steuercodes (111) in eine Programm-Umgebung (200), in welcher der neue Steuercode (111) bei Ausführung über die Nachrichten-Schnittstelle (210), einen Schnittstellenwandler (220) und eine Treiber-Schnittstelle (250) mit dem ersten Treiber (140) kommuniziert,
b2) Ermitteln (322) des zumindest einen Treiberparameters, indem eine Kommunikation zwischen dem neuen Steuercode (111) und dem Gerät (150) mittels des Schnittstellenwandlers (220) und der Treiber-Schnittstelle (250) nachgebildet wird, und daraus der zumindest eine Treiberparameter bestimmt wird,

c) Erzeugen (330) einer neuen Treiber-Umgebung (146), welche den ersten Treiber (140) und den neuen Treiber (141) umfasst, und der neuen Treiber (141) durch den zumindest einen Treiberparameter bestimmt ist,

d) Erzeugen (340) des neuen Programmcodes (101) basierend auf dem ersten Programmcodes (100), wobei der erste Steuercode (110) durch die Programm-Umgebung (200) ersetzt wird, und die ersten Treiber-Umgebung (145) durch die neue Treiber-Umgebung (146) ersetzt wird,
e) Ausführen (350) des neuen Programmcodes (101) und Ansteuern des Geräts (150).

2. Verfahren nach dem vorhergehenden Anspruch, wobei die erste Treiber-Umgebung (145) eine erste Anwendungs-Schnittstelle (120) und die neue Treiber-Umgebung (146) eine neue Anwendungs-Schnittstelle (121), sowie vorzugsweise jeweils einen Event-Manager (130) umfassen.

3. Verfahren nach dem vorhergehenden Anspruch, wobei beim Erzeugen der neuen Treiber-Umgebung (146) der erste Treiber (140) mit dem zumindest einen Treiberparameter kompiliert (270) wird, und in einer Bibliothek (260) gespeichert (271) wird, und beim Erzeugen der neuen Anwendungs-Schnittstelle (121) der neue Treiber (141) aus der Bibliothek (260) geladen (272) und mit der ersten Anwendungs-Schnittstelle (120) kompiliert wird

4. Verfahren nach einem der vorhergehenden Ansprüche, wobei der erste und der neue Steuercode (110, 111) zum Schreiben von Daten und/oder Instruktionen zum Gerät (150) und/oder Lesen von Daten und/oder Informationen vom Gerät (150) vorgesehen ist.

5. Verfahren nach einem der vorhergehenden Ansprüche, wobei nach dem Ermitteln (322) des zumindest einen Treiberparameters im Schritt b2) ein Verifizieren der Funktionalität und der Kompatibilität des neuen Steuercodes (111) erfolgt.

6. Verfahren nach einem der vorhergehenden Ansprüche, wobei die Nachrichten-Schnittstelle (210) und die Treiber-Schnittstelle (250) eine Schnittstelle nach dem MQTT-Protokoll sind.

7. Verfahren nach einem der vorhergehenden Ansprüche, wobei der Schnittstellenwandler (220) ein Nachrichten-Broker ist.

8. Verfahren nach einem der vorhergehenden Ansprüche, wobei beim Ermitteln (310) neuen Steuercodes (111) im Schritt a) folgende Schritte ausgeführt werden:

   a1) Suche nach empfohlenen Programmcodes in zumindest zwei Marktplätzen unter Verwendung von GANs, wobei vordefinierte Kriterien hinsichtlich der Funktionalität bei der Ansteuerung des Geräts (150), sowie eine Kompatibilität zu der Nachrichten-Schnittstelle (210), berücksichtigt werden,
   a2) Automatische Analyse von Programmcode-Marktplatz Anforderungsmuster
   a3) Rating von Programmcodes

9. Verfahren nach dem vorhergehenden Anspruch, wobei das Rating von Programmcodes im Schritt a3) erfolgt, indem die Relevanz eines Programmcodes am zumindest einen Marktplatz mit dem Zusammenhang

$$R(a;C) = \propto \sum_{c \in C} w_c\, p(c|a) + (1 - \alpha)\, Reco(a)$$

beschrieben werden kann, wobei

$R(a;C)$ die Relevanz eines Programmcodes/ einer App a bei einer gegebenen Menge an Clustern C ist, angegeben durch eine Benutzeranfrage oder ein Profil,
$\propto$ ein Parameter zur Gewichtung der vorhergesagten Relevanz gegenüber durch $Reco(a)$ angegebenen Community-Bewertungen,
$w_c$ das Gewicht eines Clusters $c \in C$, wobei $w_1 + w_2 = 1$,
$p(c|a)$ die (Klassen-) Wahrscheinlichkeit, die durch das ML-Modell bei Programmcode/ App a vorhergesagt wird,
$Reco(a)$ die Relevanz, abgeleitet von Ratings im Rahmen des ursprünglichen Marktplatzes von a, ist,

und für die Programmcodes für den Zielmarktplatz die Relevanz bestimmt wird und der Programmcode mit der höchsten Relevanz zum neuen Programmcode (111) bestimmt wird.

10. Vorrichtung zum Ansteuern eines Geräts (150) mit einem neuen Programmcode (101), wobei das Gerät (150) dazu eingerichtet ist, von einem ersten Programmcode (100) angesteuert zu werden, welcher einen ersten Steuercode (110) und eine erste Treiber-Umgebung (145), welche einen ersten Treiber (140) umfasst, aufweist, und die Verfahrensschritte nach einem der vorhergehenden Ansprüche ausführbar sind.

FIG 1

FIG 2

## FIG 3

10

110

100

145

120

130

140

150

141

15

16

17

18

250

200

111

210

220

## FIG 4

310

320

321

322

330

340

350

300

## FIG 5

140

270

141

271

260

272

141

121

## FIG 6

200

101

111

210

220

141

121

130

140

146

150

# FIG 7

450  411  451  400

410  421  420

# FIG 8

```
public class Marketplace  {
      List<App>  apps = new Arraylist<App> ( ) ;
      . . .
}
```

# FIG 9

```
public class Discriminator extends Marketplace  {
}
      Discriminator ( )  {
            cluster ( ) ;
      }
      int getFeedback (App a)
      . . .
      }
}
```

# FIG 10

```
public class Generator extends Marketplace {
        Discriminator discriminator = null ;

        void setinstance (Discriminator d) {
                this. discriminator = d;
        }

        void run ( ) {
                . . .
        }

        List<Double> predict (String m, double [ ] v) {
                . . .
        }

        String trainModel (List<App> apps) {
                . . .
        }

        List<App> sampleApps (List<App> filter) {
                . . .
        }
}
```

# FIG 11

```
void cluster ( ) {

        {double [ ] [ ] values = new double [apps.size ( ) ] [ ] ;
        for (App a : apps)    {
            values [apps.indexOf (a) ] = a.getWeightProfile ( ) ;
        }

        final Array2DRowRealMatrix mat =new Array2DRowRealMatrix (values) ;
        KMeans km = new KMeansParamters (k) . fitNewModel (mat) ;

        int [ ] results = km.getlabels ( ) ;
        fillClusterResults (results) ;
}
```

17

FIG 12

FIG 13

FIG 14

FIG 15

**Europäisches Patentamt**
**European Patent Office**
**Office européen des brevets**

# EUROPÄISCHER RECHERCHENBERICHT

**Nummer der Anmeldung**

EP 19 16 5906

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | KAROLINE SAATKAMP ET AL: "Generic driver injection for automated IoT application deployments", INFORMATION INTEGRATION AND WEB-BASED APPLICATIONS & SERVICES, ACM, 2 PENN PLAZA, SUITE 701NEW YORKNY10121-0701USA, 4. Dezember 2017 (2017-12-04), Seiten 320-329, XP058386072, DOI: 10.1145/3151759.3151789 ISBN: 978-1-4503-5299-4 * Seite 3, rechte Spalte, letzter Absatz *  -----  | 1-10 | INV. G06F9/4401 G06F9/54 G06F8/20 G06F8/36 G06N20/00 H04L29/08 |
| A | Anonymous: "Device driver - Wikipedia", , 24. März 2019 (2019-03-24), XP055625332, Gefunden im Internet: URL:https://en.wikipedia.org/w/index.php?title=Device_driver&oldid=889261409 [gefunden am 2019-09-24] * das ganze Dokument *  -----  | 1-10 | |
| A | Anonymous: "MQTT (Message Queuing Telemetry Transport) protocol - Wikipedia", , 21. März 2019 (2019-03-21), XP055624410, Gefunden im Internet: URL:https://en.wikipedia.org/w/index.php?title=MQTT&oldid=888839246 [gefunden am 2019-09-20] * das ganze Dokument *  -----  | 1-10 | RECHERCHIERTE SACHGEBIETE (IPC) G06F G06N H04L |

Der vorliegende Recherchenbericht wurde für alle Patentansprüche erstellt

| Recherchenort | Abschlußdatum der Recherche | Prüfer |
|---|---|---|
| München | 24. September 2019 | Kamps, Stefan |